# EUROPÄISCHE PATENTSCHRIFT

(11) **EP 3 749 161 B1**
(45) Veröffentlichungstag und Bekanntmachung des Hinweises auf die Patenterteilung: **14.08.2024**
(21) Anmeldenummer: 19739965.2
(22) Anmeldetag: 10.07.2019
(51) Int. Cl.: A47L 7/00, A47L 9/14, A47L 9/16

(54) **VERSCHLUSSEINRICHTUNG, SYSTEM, PARTIKELAUFFANGANORDNUNG UND SAUGVORRICHTUNG**
CLOSURE DEVICE, SYSTEM, PARTICLE COLLECTING ASSEMBLY AND SUCTION DEVICE
DISPOSITIF DE FERMETURE, SYSTEME, ENSEMBLE COLLECTEUR DE PARTICULES ET DISPOSITIF D'ASPIRATION

(30) Priorität: 13.07.2018 DE 102018211712
(43) Veröffentlichungstag der Anmeldung: 16.12.2020
(73) Patentinhaber: Festool GmbH, 73240 Wendlingen (DE)
(72) Erfinder: GREBING, Gerhard, 72622 Nürtingen (DE)
(74) Vertreter: Patentanwälte Magenbauer & Kollegen Partnerschaft mbB
(86) Internationale Anmeldenummer: PCT/EP2019/068501
(87) Internationale Veröffentlichungsnummer: WO 2020/011835

(56) Entgegenhaltungen:
- DE-A1- 3 919 256
- DE-A1- 4 429 342
- DE-T2- 60 012 359
- DE-U1- 29 518 166

## Beschreibung

Die Erfindung betrifft eine Verschlusseinrichtung zum Verschließen eines Partikelauffangvolumens, beispielsweise eines Innenvolumens eines Beutels oder eines Behälters, insbesondere eines Entsorgungsbehälters. Der Beutel ist beispielsweise ein Entsorgungssack oder ein Filtersack. Die Verschlusseinrichtung umfasst ein Zugangselement mit einer Zugangselement-Öffnung zur Bereitstellung eines Zugangs zu dem Partikelauffangvolumen. Die Verschlusseinrichtung verfügt ferner über einen Verschlussschieber, der relativ zum Zugangselement wahlweise in eine Freigabestellung oder eine Verschlussstellung versetzt werden kann. Der Verschlussschieber gibt die Zugangselement-Öffnung in der Freigabestellung frei und verschließt die Zugangselement-Öffnung in der Verschlussstellung.

Eine derartige Verschlusseinrichtung kann beispielsweise dazu verwendet werden, einen Beutel oder einen Behälter für eine Saugvorrichtung, insbesondere einen Staubsauger, zu verschließen. Die Verschlusseinrichtung ist zum Beispiel an dem Beutel oder dem Behälter befestigt und stellt so über die Zugangselement-Öffnung einen Zugang zu dem Innenvolumen des Beutels oder Behälters bereit. In der Freigabestellung des Verschlussschiebers können durch die Saugvorrichtung angesaugte Partikel, beispielsweise Staubpartikel, in den Beutel oder Behälter befördert werden. Anschließend kann der Beutel oder Behälter durch Versetzen des Verschlussschiebers in die Verschlussstellung verschlossen werden.

Die DE 44 29 342 A1 beschreibt ein Anschlußstück eines Filterbeutels für Staubsauger, mit einem im wesentlichen plattenförmigen Grundkörper, der eine Aufstecköffnung zum Aufstecken des Anschlußstücks auf einen Anschlußstutzen des Staubsaugers enthält, und einem am Grundkörper verschiebbar geführten Verschlußschieber, der eine Durchtrittsöffnung enthält und mittels einer vor der Durchtrittsöffnung angeordneten, frei liegenden Handgriffpartie aus einer Offenstellung, in der die Durchtrittsöffnung die Aufstecköffnung freigibt, in eine die Aufstecköffnung verschließende Schließstellung nach vorne ziehbar ist, wobei eine Sicherungseinrichtung zum Sichern des Verschlußschiebers in der Schließstellung gegen ein weiteres Herausziehen vorhanden ist.

Die DE 39 19 256 A1 beschreibt einen Staubfilterbeutel insbesondere für Staubsauger, mit einer eine Staubeinlaßöffnung für einen Sauganschlußstutzen aufweisenden Halteplatte, die eine Verschlußvorrichtung mit Schieberfunktion für die Staubeinlaßöffnung des vollen Staubfilterbeutel besitzt.

Eine Aufgabe besteht darin, die genannte Verschlusseinrichtung so zu modifizieren, dass das Risiko verringert wird, dass in dem Partikelauffangvolumen befindliche Partikel nach außen gelangen und die Umgebung des Partikelauffangvolumens kontaminieren.

Diese Aufgabe wird gelöst durch die im Kennzeichen des Anspruchs 1 angegebenen Merkmale. Erfindungsgemäß verfügt die Verschlusseinrichtung über einen Verriegelungsmechanismus zur Verriegelung des Verschlussschiebers in der Verschlussstellung gegenüber dem Zugangselement. Der Verriegelungsmechanismus erfordert zur Entriegelung ein vorgegebenes, von dem Verriegelungsmechanismus separates Entriegelungselement.

Folglich ist zur Entriegelung des Verschlussschiebers - und damit zur Öffnung der Verschlusseinrichtung - ein spezielles Teil - nämlich das Entriegelungselement - erforderlich. Ohne dieses Entriegelungselement lässt sich der Verschlussschieber nicht entriegeln und die Verschlusseinrichtung nicht öffnen. Das Entriegelungselement verhält sich zum Verriegelungsmechanismus beispielsweise wie ein Schlüssel zu einem Schloss. Das Entriegelungselement ist separat vom Verriegelungsmechanismus, d.h., das Entriegelungselement ist insbesondere kein Teil des Verriegelungsmechanismus, sondern ist zusätzlich zu dem Verriegelungsmechanismus vorhanden.

Zur Öffnung der Verschlusseinrichtung ist es erforderlich, zunächst das vorgegebene, von dem Verriegelungsmechanismus separate Entriegelungselement bereitzustellen. Ein Benutzer kann die Verschlusseinrichtung erst öffnen, nachdem er sich das Entriegelungselement besorgt hat. Dies verringert das Risiko, dass die Verschlusseinrichtung versehentlich geöffnet wird, wodurch wiederum das Risiko einer Kontaminierung der Umgebung sinkt.

Vorteilhafte Weiterbildungen sind Gegenstand der Unteransprüche.

Gemäß einer möglichen Ausgestaltung umfasst der Verriegelungsmechanismus ein im Verschlussschieber angeordnetes Durchgangsloch und ein an dem Zugangselement angeordnetes Rastelement, das in der Verschlussstellung in das Durchgangsloch greift und den Verschlussschieber so in der Verschlussstellung verriegelt.

Gemäß einer weiteren Ausgestaltung ist das Durchgangsloch und/oder das Rastelement vorzugsweise derart ausgebildet, dass in der Verschlussstellung das in das Durchgangsloch greifende Rastelement rein händisch nicht betätigbar ist, so dass zur Entriegelung des Verriegelungsmechanismus ein Entriegelungselement mit einem in das Durchgangsloch einführbaren Formelement, insbesondere einem Zapfen, erforderlich ist.

Gemäß einer weiteren Ausgestaltung umfasst die Verschlusseinrichtung das Entriegelungselement, wobei das Entriegelungselement vorzugsweise ein von dem Verschlussschieber und/oder dem Zugangselement separat vorgesehenes Teil ist.

Gemäß einer weiteren Ausgestaltung ist das Entriegelungselement an dem Verschlussschieber anbringbar ist und im angebrachten Zustand zusammen mit dem Verschlussschieber relativ zum Zugangselement bewegbar ist.

Gemäß einer weiteren Ausgestaltung verfügt das Entriegelungselement über eine Entriegelungselement-Öffnung, die in einem Zustand, in dem das Entriegelungselement an dem Verschlussschieber angebracht ist und sich der Verschlussschieber in der Freigabestellung befindet, über der Zugangselement-Öffnung befindet, so dass die Zugangselement-Öffnung und die Entriegelungselement-Öffnung zusammen den Zugang zu dem Partikelauffangvolumen bereitstellen.

Gemäß einer weitere Ausgestaltung ist in einem Zustand, in dem das Entriegelungselement an dem Verschlussschieber angebracht ist, der Verschlussschieber ausschließlich zwischen der Freigabestellung und der Verschlussstellung verschiebbar, wobei sich die Verschlusseinrichtung in jeder möglichen Verschiebestellung des Verschlussschiebers in einem Zustand befindet, in dem die Zugangselement-Öffnung entweder verschlossen ist oder zusammen mit der Entriegelungselement-Öffnung den Zugang zu dem Partikelauffangvolumen bereitstellt.

Gemäß einer weiteren Ausgestaltung umfasst die Verschlusseinrichtung eine Führungseinrichtung, die ausgebildet ist, das Entriegelungselement in einem an dem Verschlussschieber angebrachten Zustand relativ zum Zugangselement zu führen und eine Abnahme des Entriegelungselements nur in der Verschlussstellung zu ermöglichen.

Gemäß einer weiteren Ausgestaltung liegt der Verschlussschieber in einem Zustand, in dem das Entriegelungselement an dem Verschlussschieber angebracht ist und sich der Verschlussschieber in der Freigabestellung befindet, mit einem seitlichen Endbereich auf dem Zugangselement auf, so dass der Verschlussschieber in diesem Zustand nicht von dem Entriegelungselement abgenommen werden kann.

Gemäß einer weiteren Ausgestaltung umfasst die Verschlusseinrichtung einen Sperrmechanismus, der in der Freigabestellung des Verschlussschiebers ein Verschieben des Verschlussschiebers relativ zum Zugangselement in Richtung weg von der Verschlussstellung verhindert.

Gemäß einer weiteren Ausgestaltung weist das Entriegelungselement an zwei entgegengesetzten Seiten jeweils ein Formelement, insbesondere einen Zapfen, auf, so dass es gleichzeitig an zwei Verschlussschiebern anbringbar ist.

Die Erfindung betrifft ferner ein System, umfassend eine hier beschriebene Verschlusseinrichtung als erste Verschlusseinrichtung, wobei das Zugangselement ein erstes Zugangselement, der Verschlussschieber ein erster Verschlussschieber, das Partikelauffangvolumen ein erstes Partikelauffangvolumen und die Zugangselement-Öffnung eine erste Zugangselement-Öffnung ist, wobei das Entriegelungselement an dem ersten Verschlussschieber angebracht ist, gekennzeichnet durch eine zweite Verschlusseinrichtung mit einem zweiten Zugangselement, das eine zweite Zugangselement-Öffnung aufweist, das einen Zugang zu einem zweiten Partikelauffangvolumen bereitstellt, und einem zweiten Verschlussschieber, der an dem Entriegelungselement angebracht ist und mit dem sich die zweite Zugangselement-Öffnung verschließen lässt.

Gemäß einer möglichen Ausgestaltung sind die Verschlussschieber über das Entriegelungselement miteinander bewegungsgekoppelt, wobei sich das System in jeder Verschiebestellung der Verschlussschieber in einem Zustand befindet, in dem jede der Zugangselement-Öffnungen jeweils entweder verschlossen ist oder zusammen mit der Entriegelungselement-Öffnung den Zugang zu dem jeweiligen Partikelauffangvolumen bereitstellt.

Die Erfindung betrifft ferner eine Partikelauffanganordnung umfassend eine hier beschriebene Verschlusseinrichtung sowie einen Beutel, insbesondere einen Entsorgungssack oder einen Filtersack, oder einen Behälter, insbesondere einen Entsorgungsbehälter, wobei die Verschlusseinrichtung an dem Beutel oder dem Behälter angebracht ist.

Die Erfindung betrifft ferner eine Saugvorrichtung zum Aufsaugen von Partikeln, insbesondere Staub, in ein Partikelauffangvolumen, umfassend ein hier beschriebenes System und/oder eine hier beschriebene Verschlusseinrichtung.

Details sowie exemplarische Ausführungsformen werden nachstehend unter Bezugnahme auf die Zeichnungen erläutert. Dabei zeigt
- Figur 1: eine seitliche Schnittansicht einer Verschlusseinrichtung gemäß einer ersten Ausführungsform, wobei sich der Verschlussschieber in der Verschlussstellung befindet und ein Entriegelungselement getrennt von dem Verschlussschieber angeordnet ist,
- Figur 2: eine Schnittansicht von einem Zugangselement, einem Verschlussschieber und einem Entriegelungselement gemäß der ersten Ausführungsform,
- Figur 3: eine Schnittansicht der Verschlusseinrichtung gemäß der ersten Ausführungsform, wobei das Entriegelungselement an dem Verschlussschieber angebracht ist und sich der Verschlussschieber in der Verschlussstellung befindet,
- Figur 4: eine Schnittansicht der Verschlusseinrichtung gemäß der ersten Ausführungsform, wobei das Entriegelungselement an dem Verschlussschieber angebracht ist und sich der Verschlussschieber in der Freigabestellung befindet,
- Figur 5: eine Draufsicht eines Zugangselements, eines Verschlussschiebers und eines Entriegelungselements gemäß einer zweiten Ausführungsform,
- Figur 6: eine seitliche Schnittansicht des Zugangselements, des Verschlussschiebers und des Entriegelungselements gemäß der zweiten Ausführungsform,
- Figur 7: eine Vorderansicht des Zugangselements, des Verschlussschiebers und des Entriegelungselements gemäß der zweiten Ausführungsform,
- Figur 8: ein System mit einer ersten Verschlusseinrichtung in einer Verschlussstellung und einer zweiten Verschlusseinrichtung in einer Freigabestellung und
- Figur 9: das System mit der ersten Verschlussstellung in einer Freigabestellung und der zweiten Verschlusseinrichtung in der Verschlussstellung.

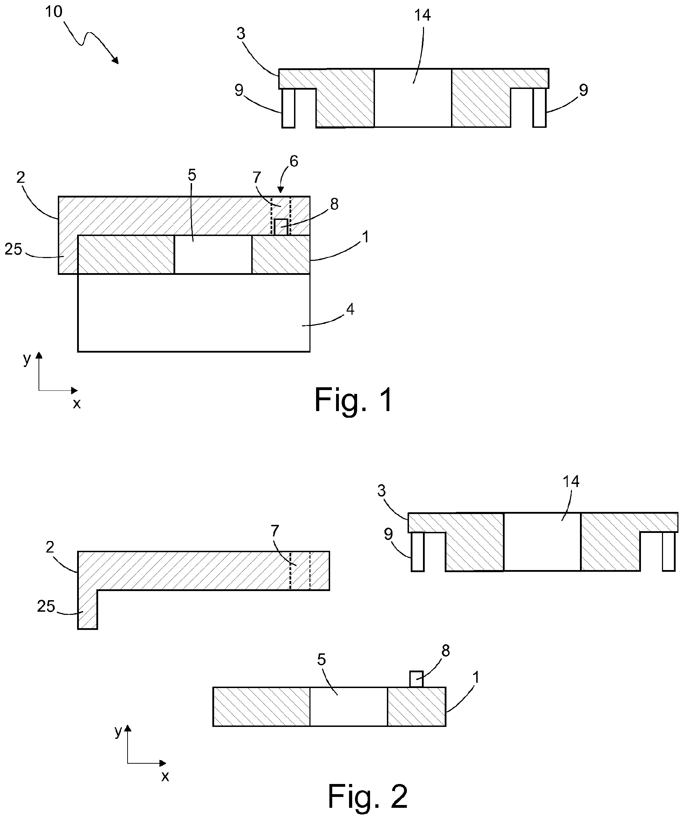

Die Figuren 1 bis 4 zeigen seitliche Schnittansichten einer Verschlusseinrichtung 10 gemäß einer ersten Ausführungsform. Die Verschlusseinrichtung 10 umfasst ein Zugangselement 1 und einen Verschlussschieber 2. Zusätzlich dazu ist in den Figuren 1 bis 4 ein Entriegelungselement 3 gezeigt, das aber kein zwingender Bestandteil der Verschlusseinrichtung 10 ist.

In der Figur 1 ist ferner ein Partikelauffangvolumen 4 gezeigt, das beispielsweise das Innenvolumen eines Beutels, insbesondere eines Entsorgungssacks oder eines Filtersacks, oder eines Behälters, insbesondere eines Entsorgungsbehälters, darstellt. Beispielsweise kann die Verschlusseinrichtung 10 an einem Beutel, insbesondere einem Staubsaugerbeutel, oder einem Behälter befestigt sein, um das Innenvolumen des Beutels oder Behälters zu verschließen. Eine solche Anordnung aus einem Beutel oder einem Behälter und einer daran angebrachten Verschlusseinrichtung kann auch als Partikelauffanganordnung bezeichnet werden.

Das Zugangselement 1 verfügt über eine Zugangselement-Öffnung 5 zur Bereitstellung eines Zugangs zu dem Partikelauffangvolumen 4.

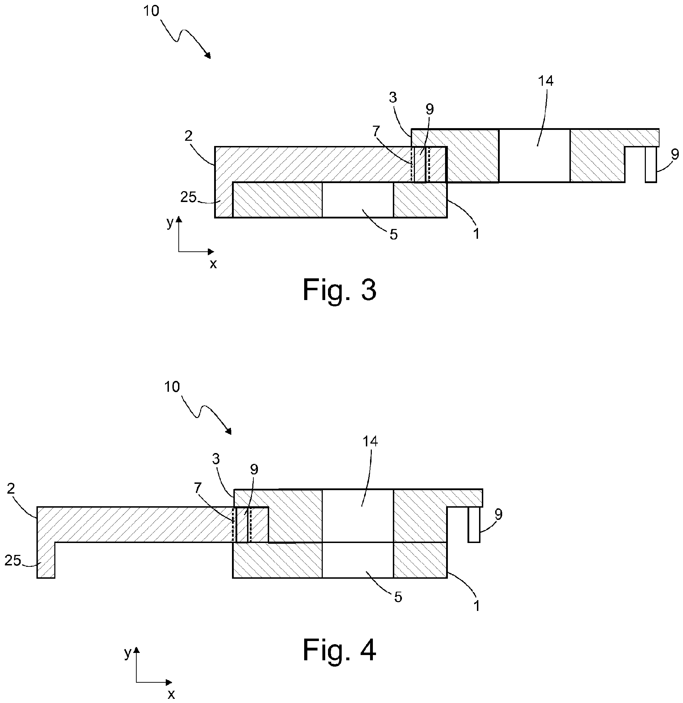

Der Verschlussschieber 2 kann relativ zum Zugangselement 1 wahlweise in die Freigabestellung oder die Verschlussstellung versetzt werden. In der Freigabestellung gibt der Verschlussschieber 2 die Zugangselement-Öffnung 5 frei und in der Verschlussstellung verschließt der Verschlussschieber 2 die Zugangselement-Öffnung 5. In der Figur 3 ist eine exemplarische Verschlussstellung und in der Figur 4 eine exemplarische Freigabestellung gezeigt.

Die Verschlusseinrichtung 10 verfügt ferner über einen Verriegelungsmechanismus 6 zur Verriegelung des Verschlussschiebers 2 in der Verschlussstellung gegenüber dem Zugangselement 1. Der Verriegelungsmechanismus 6 erfordert zur Entriegelung das zu dem Verriegelungsmechanismus 6 zusätzlich vorgesehene Entriegelungselement 3.

Durch die Bereitstellung des Verriegelungsmechanismus wird, wie vorstehend bereits erläutert, das Risiko einer versehentlichen Öffnung der Verschlusseinrichtung 10 verringert. Um den Verschlussschieber 2 zu entriegeln, so dass er in die Freigabestellung versetzt werden kann, wird das Entriegelungselement 3 benötigt. Ein Benutzer muss sich daher zuerst das Entriegelungselement 3 besorgen, bevor er die Verschlusseinrichtung 10 öffnen kann. Dies verringert das Risiko, dass der Benutzer die Verschlusseinrichtung 10 unbeabsichtigt öffnet.

Nachstehend werden weitere exemplarische Details und Ausführungsformen diskutiert. Dabei wird auf die in den Figuren eingezeichneten, orthogonal zueinander ausgerichteten Raumrichtungen "x", "y", "z" als "x-Richtung", "y-Richtung" und "z-Richtung" Bezug genommen.

Es sei darauf hingewiesen, dass die tatsächlichen Seitenverhältnisse der einzelnen Komponenten der Verschlusseinrichtung 10 - also des Zugangselements 1, des Verschlussschiebers 2 und/oder des Entriegelungselements 3 - von den Darstellungen in den Figuren dahingehend abweichen können, dass die Erstreckung jeder der Komponenten in x-Richtung und/oder z-Richtung um ein Vielfaches, zweckmäßigerweise mindestens um den Faktor 10, vorzugsweise mindestens um den Faktor 50, größer ist als die Erstreckung der jeweiligen Komponente in y-Richtung.

Das Zugangselement 1 ist exemplarisch plattenförmig ausgebildet. Das Zugangselement 1 verfügt über eine dem Partikelauffangvolumen 4 zugewandte Unterseite und eine dem Verschlussschieber 2 (in der Verschlussstellung) zugewandte Oberseite. Die Unterseite und die Oberseite sind einander entgegengesetzt und sind exemplarisch normal zur y-Richtung ausgerichtet. Zweckmäßigerweise handelt es sich bei der Unterseite und der Oberseite jeweils um die flächenmäßig größten Seiten des Zugangselements 1.

Das Zugangselement 1 verfügt über die Zugangselement-Öffnung 5. Exemplarisch handelt es sich bei der Zugangselement-Öffnung 5 um eine Durchbrechung von der Oberseite zu der Unterseite des Zugangselements 1. In einem Zustand, in dem das Zugangselement 1 an einem das Partikelauffangvolumen 4 umschließenden Beutel, insbesondere einem Staubsaugerbeutel, oder einem Behälter angebracht ist, stellt die ZugangsÖffnung 5 einen Zugang zu dem Partikelauffangvolumen 4 bereit, zweckmäßigerweise den einzigen Zugang zu dem Partikelauffangvolumen 4. Der Beutel oder Behälter kann beispielsweise an der Unterseite der Verschlusseinrichtung 10 angebracht, insbesondere angeklebt, sein. Der Beutel oder Behälter ist insbesondere dauerhaft form- und/oder kraftschlüssig an der Verschlusseinrichtung 10 angebracht, insbesondere durch eine chemische oder physikalische Verbindung.

Der Verschlussschieber 2 ist im Wesentlichen plattenförmig ausgebildet. Der Verschlussschieber 2 verfügt über eine dem Zugangselement 1 zugewandte Unterseite und eine entgegengesetzt ausgerichtete Oberseite. Bei der Unterseite und der Oberseite handelt es sich vorzugsweise um die flächenmäßig größten Seiten des Verschlussschiebers 2. Exemplarisch sind die Unterseite und die Oberseite normal zur y-Richtung ausgerichtet.

Der Verschlussschieber 2 ist relativ zum Zugangselement 1 vorzugsweise in x-Richtung linear beweglich gelagert. Exemplarisch lässt sich der Verschlussschieber 2 durch eine lineare Verschiebung in x-Richtung relativ zum Zugangselement 1 zwischen der Freigabestellung und der Verschlussstellung bewegen. Durch den Verriegelungsmechanismus kann insbesondere eine Verschiebung des Verschlussschiebers 2 gegenüber dem Zugangselement 1 in diese x-Richtung gesperrt werden.

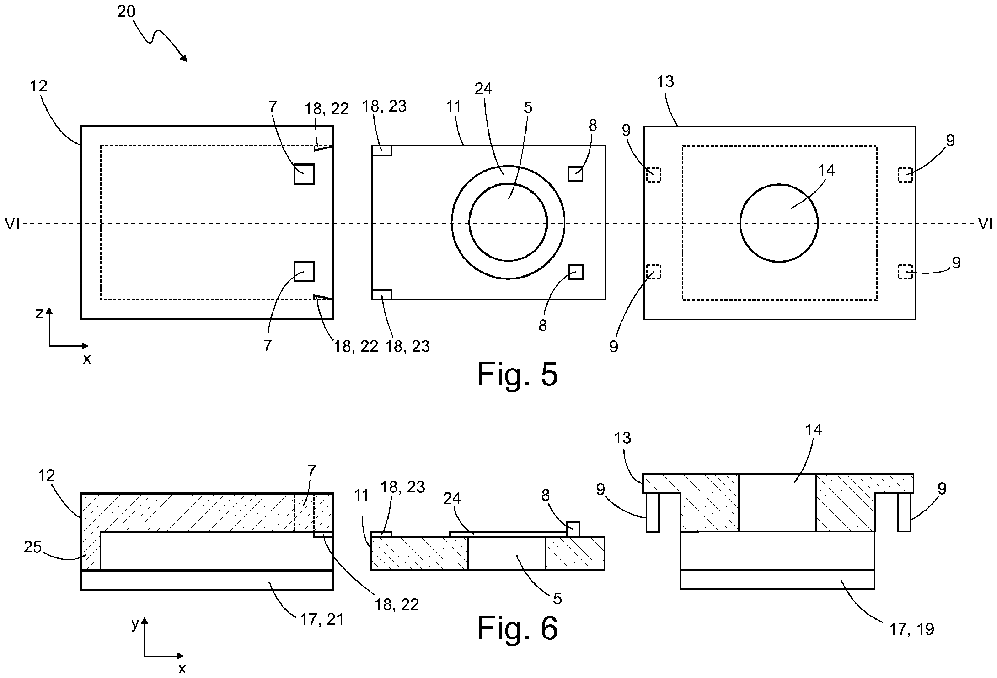

Zweckmäßigerweise ist der Verschlussschieber 2 derart gelagert, dass er relativ zum Zugangselement 1 nicht in y-Richtung bewegt werden kann. Exemplarisch ist der Verschlussschieber 2 direkt am Zugangselement 1 gelagert. Hierzu kann eine entsprechende (in den Figuren 1 bis 4 nicht gezeigte) Führungseinrichtung vorgesehen sein. Beispielsweise kann an der Oberseite des Zugangselements 1 eine in x-Richtung verlaufende Nut vorhanden sein und an der dem Zugangselement 1 zugewandten Unterseite des Verschlussschiebers 2 ein in die Nut greifender Vorsprung vorhanden sein. Alternativ oder zusätzlich dazu kann eine/die Nut auch an der Unterseite des Verschlussschiebers 2 und ein/der in die Nut greifende Vorsprung an der Oberseite des Zugangselements 1 vorhanden sein. Ferner kann die Lagerung auch durch Führungsabschnitte mit L-förmigen Schienen bereitgestellt werden, wie dies nachfolgend noch unter Bezugnahme auf die Figuren 5 bis 7 erläutert werden wird.

Der Verschlussschieber 2 liegt vorzugsweise direkt auf dem Zugangselement 1 auf, wie dies in der Figur 1 gezeigt ist. Der Verschlussschieber 2 lässt sich in x-Richtung verschieben und kann so wahlweise in die Freigabestellung oder die Verschlussstellung versetzt werden. In der Figur 1 (wo sich der Verschlussschieber 2 in der Verschlussstellung befindet) muss der Verschlussschieber 2 beispielsweise nach links verschoben werden, um ihn in die Freigabestellung zu versetzen. Eine solche Verschiebung in Richtung von der Verschlussstellung zur Freigabestellung wird auch als Verschiebung in Richtung der Freigabestellung oder als Verschiebung in Richtung weg von der Verschlussstellung bezeichnet. Eine Verschiebung in die entgegengesetzte Richtung (in der Figur 1 nach rechts) wird als Verschiebung in Richtung der Verschlussstellung oder als Verschiebung in Richtung weg von der Freigabestellung bezeichnet.

Exemplarisch verfügt die Verschlusseinrichtung 10 über einen Anschlag 25, der in der Verschlussstellung des Verschlussschiebers 2 eine weitere Verschiebung des Verschlussschiebers 2 in Richtung weg von der Freigabestellung (also in der Figur 1 nach rechts) verhindert. Zweckmäßigerweise ist der Anschlag 25 an dem Verschlussschieber 2 vorgesehen. Exemplarisch handelt es sich bei dem Anschlag 25 um einen in y-Richtung nach unten ragenden Vorsprung. Der Anschlag 25 ist in x-Richtung an einem seitlichen Endbereich des Verschlussschiebers 2 angeordnet.

In der Figur 1 befindet sich der Verschlussschieber 2 gegenüber dem Zugangselement 1 in der Verschlussstellung. In dieser Verschlussstellung deckt die Unterseite des Verschlussschiebers 2 die Zugangselement-Öffnung 5 vollständig ab, sodass die Zugangselement-Öffnung 5 und damit auch das Partikelauffangvolumen 4 verschlossen ist.

Der Verschlussschieber 2 ist durch den Verriegelungsmechanismus 6 relativ zum Zugangselement 1 verriegelt; d.h. dass sich der Verschlussschieber 2 relativ zum Zugangselement 1 nicht in die Freigabestellung bewegen lässt, also insbesondere nicht in x-Richtung verschoben werden kann. Gemäß einer bevorzugten Ausgestaltung lässt sich der Verschlussschieber 2 dann, wenn er durch den Verriegelungsmechanismus 6 verriegelt ist, überhaupt nicht - also in keine Raumrichtung - relativ zum Zugangselement 1 bewegen.

Zur Entriegelung des Verschlussschiebers 2 ist eine Betätigung des Verriegelungsmechanismus 6 erforderlich. Hierzu wird ein spezielles Entriegelungselement - beispielsweise das in der Figur 1 gezeigte Entriegelungselement 3 - benötigt. Dies bedeutet insbesondere, dass der Verriegelungsmechanismus 6 derart ausgebildet ist, dass er rein händisch nicht betätigt werden kann, also dass der Verschlussschieber 2 rein händisch nicht entriegelt werden kann.

Exemplarisch wird eine rein händische Betätigung des Verriegelungsmechanismus dadurch verhindert, dass ein (zur Entriegelung des Verschlussschiebers 2 zu betätigendes Rastelement 8) derart angeordnet ist, dass es in der Verschlussstellung mit der bloßen Hand nicht erreicht werden kann.

Exemplarisch umfasst der Verriegelungsmechanismus 6 ein im Verschlussschieber 2 angeordnetes Durchgangsloch 7 und das an dem Zugangselement 1 angeordnete Rastelement 8. Das Rastelement 8 greift in der Verschlussstellung in das Durchgangsloch 7 und verriegelt den Verschlussschieber 2 auf diese Weise in der Verschlussstellung.

Das Durchgangsloch 7 und/oder das Rastelement 8 sind derart ausgebildet, dass in der Verschlussstellung das in das Durchgangsloch 7 greifende Rastelement 8 rein händisch nicht betätigbar ist. Insbesondere ist die Länge (z.B. die Erstreckung in y-Richtung) des Durchgangslochs 7 und/oder des Rastelements 8 und/oder der Durchmesser des Durchgangslochs 7 so gewählt, dass das Rastelement 8 mit der bloßen Hand nicht erreicht und/oder nicht betätigt werden kann. Beispielsweise ist der Durchmesser des Durchgangslochs 7 so klein, dass ein menschlicher Finger nicht hineinpasst und die Länge des Rastelements 8 (z.B. in y-Richtung) ist so gewählt, dass es nicht aus dem Durchgangsloch 7 hinausragt.

Zur Entriegelung des Verriegelungsmechanismus 6 ist daher das Entriegelungselement 3 erforderlich. Das Entriegelungselement 3 verfügt über ein Formelement, insbesondere einen Zapfen 9, dessen Durchmesser so gewählt ist, dass das Formelement in das Durchgangsloch 7 passt. Mit dem Formelement kann das Rastelement 3 betätigt werden, so dass der Verschlussschieber 2 entriegelt wird und sich in die Freigabestellung versetzen lässt.

Exemplarisch verläuft das Durchgangsloch 7 von der Oberseite zu der Unterseite des Verschlussschiebers 2. Das Durchgangsloch 7 verläuft insbesondere in y-Richtung. Zweckmäßigerweise hat das Durchgangsloch 7 einen runden Querschnitt. Das Durchgangsloch 7 ist zweckmäßigerweise in x-Richtung in einem seitlichen Endbereich des Verschlussschiebers 2 angeordnet.

Das Rastelement 8 ist exemplarisch an der Oberseite des Zugangselements 1 angeordnet. Das Rastelement 8 ragt in y-Richtung nach oben. Zweckmäßigerweise ist das Rastelement 8 aus elastischem Material und/oder elastisch an der Oberseite des Zugangselements 1 angebracht, so dass die Oberseite des Rastelements 8 in y-Richtung relativ zur Oberseite des Zugangselements 1 durch Betätigung bewegt werden kann. Zweckmäßigerweise kann das Rastelement 8 in y-Richtung so weit nach unten gedrückt werden, dass es nicht mehr in das Durchgangsloch 7 greift und sich der Verschlussschieber 2 in x-Richtung verschieben und in die Freigabestellung versetzen lässt. Beispielsweise ist das Zugangselement 1 aus einem elastischen Material gefertigt und verfügt als das Rastelement 8 über eine in y-Richtung nach oben abstehende Rastzunge.

Zweckmäßigerweise ist das Rastelement 8 derart ausgebildet, dass es dann, wenn der Verschlussschieber 2 in die Verschlussstellung versetzt wird, von selbst in das Durchgangsloch 7 drängt, so dass der Verschlussschieber 2 in der Verschlussstellung automatisch verriegelt wird.

Alternativ oder zusätzlich zu der vorgenannten Ausgestaltung kann zur Verriegelung des Verschlussschiebers auch am Verschlussschieber eine erste Verriegelungsstruktur, insbesondere ein Verriegelungsvorsprung, angeordnet sein und am Zugangselement eine zweite Verriegelungsstruktur, insbesondere eine Verriegelungsvertiefung, angeordnet sein, die in der Verschlussstellung in Eingriff mit der ersten Verriegelungsstruktur steht. Zweckmäßigerweise verfügt der Verschlussschieber über ein Federelement, das das Zugangselement gegen den Verschlussschieber drückt und so den Eingriff der beiden Verriegelungsstrukturen bewirkt.

Zweckmäßigerweise umfasst die Verschlusseinrichtung 10 das Entriegelungselement 3. Vorzugsweise ist das Entriegelungselement 3 ein von dem Verschlussschieber 2 und/oder dem Zugangselement 1 separat vorgesehenes Teil, wie dies in den Figuren gezeigt ist. Zur Erfüllung seiner Grundfunktion - nämlich der Entriegelung des Verriegelungsmechanismus - muss das Entriegelungselement 3 wenigstens über ein in das Durchgangsloch 7 einführbares Element, beispielsweise das Formelement, verfügen.

Das Entriegelungselement 3 ist vorzugsweise derart ausgestaltet, dass es über diese Grundfunktion hinaus noch weitere Funktionen bereitstellen kann, wie dies nachstehend noch erläutert wird.

Das Entriegelungselement 3 ist im Wesentlichen plattenförmig ausgebildet. Das Entriegelungselement 3 verfügt über eine Oberseite und eine Unterseite, die zweckmäßigerweise die beiden flächenmäßig größten Seiten des Entriegelungselements 3 sind. Die nachstehenden Erläuterungen beziehen sich auf die in den Figuren 1 bis 4 gezeigte Ausrichtung des Entriegelungselements 3, bei der die Oberseite und/oder Unterseite normal zur y-Richtung ausgerichtet sind.

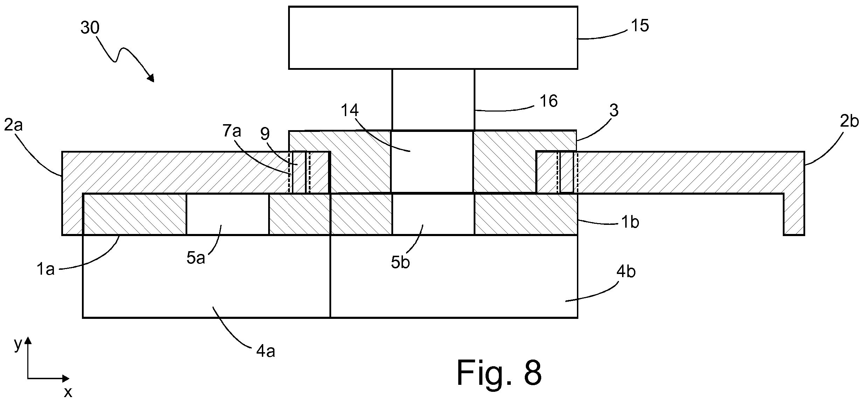

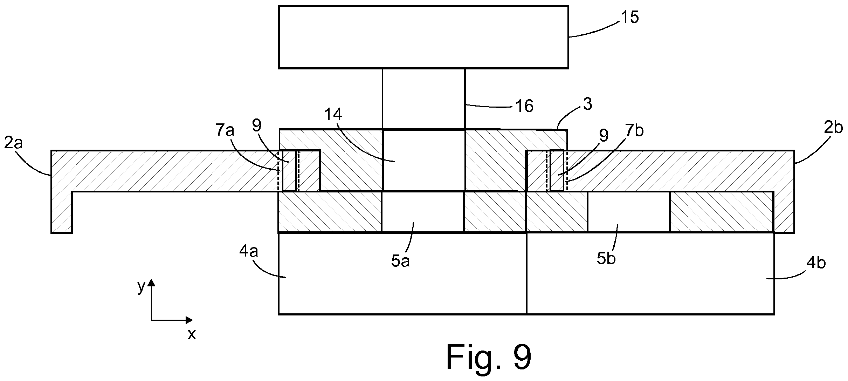

Das Entriegelungselement 3 verfügt an wenigstens einem seitlichen Endbereich in x-Richtung ein nach unten ragendes Formelement, insbesondere einen Zapfen 9. Exemplarisch verfügt das Entriegelungselement 3 an beiden seitlichen Endbereichen in x-Richtung über jeweils wenigstens ein nach unten ragendes Formelement. Wie nachstehend noch im Zusammenhang mit den Figuren 8 und 9 erläutert werden wird, kann ein solches, auf beiden Seiten mit Formelementen versehenes Entriegelungselement 3 in vorteilhafter Weise zusammen mit zwei Verschlusseinrichtungen verwendet werden. In dem Beispiel der Figuren 1 bis 4 ist ein solches, beidseitig mit Formelementen versehenes Entriegelungselement 3 aber nicht zwingend erforderlich.

Vorzugsweise ist das Formelement, insbesondere der Zapfen 9, an dem Entriegelungselement 3 in einer Aussparung vorgesehen. Die Aussparung ist derart ausgestaltet, dass sie einen seitlichen Endbereich in x-Richtung des Verschlussschiebers 2 aufnimmt, wenn das Formelement in das Durchgangsloch 7 eingesetzt ist. In dieser Aussparung ist das Formelement vorgesehen, der sich von einem in x-Richtung ragenden Vorsprung aus nach unten erstreckt. Zweckmäßigerweise fluchtet die Unterseite des Formelements mit der Unterseite des Entriegelungselements 3.

Das Entriegelungselement 3 ist zweckmäßigerweise an dem Verschlussschieber 2 anbringbar und im angebrachten Zustand zusammen mit dem Verschlussschieber 2 relativ zum Zugangselement 1 bewegbar. Insbesondere kann das Entriegelungselement 3 im angebrachten Zustand in x-Richtung relativ zum Zugangselement 1 verschoben werden.

Das Entriegelungselement 3 verfügt dazu zweckmäßigerweise über einen Führungsabschnitt, der zu der vorstehend erwähnten Führungseinrichtung kompatibel ist, mit der der Verschlussschieber 2 gegenüber dem Zugangselement 1 gelagert ist. Ist beispielsweise an dem Verschlussschieber 2 eine Nut, ein Vorsprung und/oder ein Führungsabschnitt zur Führung des Verschlussschiebers 2 gegenüber dem Zugangselement 1 vorhanden, so kann das Entriegelungselement 3 über eine entsprechende Nut, einen Vorsprung und/oder einen Führungsabschnitt verfügen, so dass das Entriegelungselement 3 in gleicher Weise wie der Verschlussschieber 2 gegenüber dem Zugangselement 1 gelagert werden kann. Es kann also eine Führungseinrichtung bereitgestellt werden, mit der das Entriegelungselement 3 in einem an dem Verschlussschieber 2 angebrachten Zustand relativ zum Zugangselement 1 geführt wird, insbesondere in x-Richtung.

Zweckmäßigerweise ist diese Führungseinrichtung derart ausgebildet, dass eine Abnahme des Entriegelungselements 3 nur in der Verschlussstellung des Verschlussschiebers 2 möglich ist. Dies kann beispielsweise dadurch erzielt werden, dass die Verschlusseinrichtung 10 derart ausgebildet ist, dass zur Versetzung des Verschlussschiebers 2 aus der Verschlussstellung eine Bewegung erforderlich ist, bei der das (mit dem Verschlussschieber 2 mitbewegte) Entriegelungselement 3 relativ zum Zugangselement 1 in eine Lagerung gebracht wird, die eine Abnahme des Entriegelungselements 3 vom Zugangselement 1 und/oder vom Verschlussschieber 2 verhindert.

Im gezeigten Beispiel wird dies exemplarisch dadurch realisiert, dass zur Versetzung des Verschlussschiebers 2 aus der Verschlussstellung eine lineare Bewegung des Verschlussschiebers 2 (und des daran angebrachten Entriegelungselements 3) in x-Richtung erforderlich ist. Die Bewegung in x-Richtung bewirkt wiederum, dass ein (nicht gezeigter) Führungsabschnitt des Entriegelungselements 3 mit dem Zugangselement 1 in Eingriff gebracht wird, wodurch eine Abnahmebewegung des Entriegelungselements 3 - also eine Bewegung in einer Richtung, in der das Formelement aus dem Durchgangsloch 7 gezogen wird - gesperrt wird.

In einem an dem Verschlussschieber 2 angebrachten Zustand ist das Entriegelungselement 3 an den Verschlussschieber 2 in x-Richtung angesetzt. Vorzugsweise fluchtet die Unterseite des Entriegelungselements 3 mit der Unterseite des Verschlussschiebers 2.

In einem Zustand, in dem sich der Verschlussschieber 2 nicht in der Verschlussstellung befindet, wie dies beispielsweise in der Figur 4 gezeigt ist, ist die Unterseite des Entriegelungselement 3 der Oberseite des Zugangselements 1 zugewandt. Zweckmäßigerweise liegt die Unterseite des Entriegelungselement 3 in diesem Zustand direkt auf der Oberseite des Zugangselements 1 auf.

Zur Anbringung des Entriegelungselements 3 an den Verschlussschieber 2 wird das Formelement in das Durchgangsloch 7 eingeführt und das Rastelement 8 mit dem Formelement soweit nach unten gedrückt, bis sich der Verschlussschieber 2 hin zu der Freigabestellung bewegen lässt. Vorzugsweise wird das Entriegelungselement 3 dazu relativ zum Zugangselement 1 in y-Richtung bewegt. Dann können der Verschlussschieber 2 und das Entriegelungselement 3 zusammen relativ zum Zugangselement 1 hin zur der Freigabestellung verschoben werden. Das Entriegelungselement 3 wird dabei gewissermaßen auf das Zugangselement 1 geschoben, so dass ein an dem Entriegelungselement 3 angeordneter Führungsabschnitt mit dem Zugangselement 1 zusammenwirkt, um eine lineare Lagerung des Entriegelungselements 3 gegenüber dem Zugangselement 1 bereitzustellen.

Die Abnahme des Entriegelungselements 3 erfolgt dadurch, dass zuerst der Verschlussschieber 2 und das Entriegelungselement 3 zusammen in Richtung hin zu der Verschlussstellung verschoben werden, bis sich der Verschlussschieber 2 in der Verschlussstellung befindet. Dann wird das Entriegelungselement 3 relativ zum Verschlussschieber 2 nach oben bewegt, so dass das Formelement aus dem Durchgangsloch 7 gezogen wird. Das Rastelement 8 greift dann in das Durchgangsloch 7, so dass der Verschlussschieber 2 relativ zum Zugangselement 1 verriegelt ist.

Alternativ oder zusätzlich zu der vorstehend beschriebenen Ausgestaltung kann das Entriegelungselement auch über eine Befestigungsschnittstelle mit einem Rasthaken verfügen, an die der Verschlussschieber 2 mittels einer Schwenkbewegung befestigbar ist.

Das Entriegelungselement 3 verfügt über eine Entriegelungselement-Öffnung 14, die in einem Zustand, in dem das Entriegelungselement 3 an dem Verschlussschieber 2 angebracht ist und sich der Verschlussschieber 2 in der Freigabestellung befindet, über der Zugangselement-Öffnung 5 liegt, so dass die Zugangselement-Öffnung 5 und die Entriegelungselement-Öffnung 14 zusammen den Zugang zu dem Partikelauffangvolumen 4 bereitstellen. Die Entriegelungselement-Öffnung 14 ist vorzugsweise eine Durchbrechung, die von der Oberseite zur Unterseite des Entriegelungselements 3 verläuft.

Zweckmäßigerweise ist an der Entriegelungselement-Öffnung 14 eine (in den Figuren 1 bis 4 nicht gezeigte) Partikelleitung, beispielsweise ein (Saug-)Schlauch, anschließbar oder angeschlossen. Zu diesem Zweck kann beispielsweise an der Oberseite des Entriegelungselements 3 ein entsprechender Leitungsanschluss, insbesondere ein Schlauchanschluss, vorgesehen sein. Über die Partikelleitung können die in dem Partikelauffangvolumen 4 zu sammelnden Partikel zugeführt werden.

In einem Zustand, in dem das Entriegelungselement 3 an dem Verschlussschieber 2 angebracht ist, kann der Verschlussschieber 2 vorzugsweise ausschließlich zwischen der Freigabestellung und der Verschlussstellung verschoben werden, wobei sich die Verschlusseinrichtung 10 in jeder möglichen Verschiebestellung des Verschlussschiebers in einem Zustand befindet, in dem die Zugangselement-Öffnung 5 entweder verschlossen ist oder zusammen mit der Entriegelungselement-Öffnung 14 den Zugang zu dem Partikelauffangvolumen 4 bereitstellt.

Zweckmäßigerweise ist die Zugangselement-Öffnung 5 in jeder Verschiebestellung des Verschlussschiebers 2 außer der Freigabestellung verschlossen. Dies wird beispielsweise dadurch realisiert, dass die in diesen Verschiebestellungen auf der Zugangselement-Öffnung 5 aufliegenden Abschnitte der Unterseiten des Verschlussschiebers 2 und des Entriegelungselements 3 verschlossen sind, also keine Öffnung zur Umgebung bereitstellen.

Auf diese Weise kann das Risiko einer Kontamination der Umgebung durch in dem Partikelauffangvolumen befindliche Partikel weiter verringert werden, insbesondere bei Vorgängen, bei denen die Verschlusseinrichtung 10 an eine Partikelleitung angeschlossen oder von dieser getrennt wird.

Bei konventionellen Verschlusseinrichtungen für Entsorgungssäcke, insbesondere Staubsaugerbeutel, ist es in der Regel erforderlich, die Verschlusseinrichtung zuerst zu öffnen, bevor eine Partikelleitung, beispielsweise ein Saugschlauch, angeschlossen werden kann. Ferner ist es in der Regel notwendig, die Partikelleitung abzunehmen, bevor die (konventionelle) Verschlusseinrichtung verschlossen werden kann. Zwischen dem verschlossenen Zustand und dem Zustand, bei dem die Partikelleitung angeschlossen ist, gibt es bei den konventionellen Verschlusseinrichtungen daher einen Zustand, bei dem die Verschlusseinrichtung offen gegenüber der Umgebung ist, so dass Partikel aus einem Partikelauffangvolumen durch die Verschlusseinrichtung nach außen gelangen und die Umgebung kontaminieren können.

Bei der in den Figuren 3 und 4 gezeigten Ausgestaltung der Verschlusseinrichtung 10 wird eine solche Kontamination der Umgebung dadurch verhindert, dass die Zugangselement-Öffnung 5 auch bei einer Anbringung/Abnahme einer Partikelleitung stets verschlossen bleiben kann. Dies wird insbesondere dadurch erreicht, dass die Partikelleitung nicht direkt an der Zugangselement-Öffnung 5 sondern stattdessen an der Entriegelungselement-Öffnung 14 angebracht wird, so dass eine Anbringung/Abnahme der Partikelleitung in einem Zustand erfolgen kann, in dem die Zugangselement-Öffnung 5 gegenüber der Umgebung verschlossen ist. Die Partikelleitung wird dann über die Entriegelungselement-Öffnung 14 mit der Zugangselement-Öffnung 5 verbunden, indem die Entriegelungselement-Öffnung 14 über die Zugangselement-Öffnung 5 geschoben wird. Die Zugangselement-Öffnung 5 bleibt dabei gegenüber der Umgebung stets verschlossen. Das Risiko einer Kontamination der Umgebung kann folglich verringert werden.

Die Figur 4 zeigt einen Zustand, in dem das Entriegelungselement 3 an dem Verschlussschieber 2 angebracht ist und sich der Verschlussschieber 2 in der Freigabestellung befindet. In diesem Zustand liegt ein seitlicher Endbereich des Verschlussschiebers 2 auf dem Zugangselement 1 auf, so dass der Verschlussschieber 2 in diesem Zustand nicht von dem Entriegelungselement 3 abgenommen werden kann.

Insbesondere ist die Verschlusseinrichtung 10 derart ausgebildet, dass in der Freigabestellung des Verschlussschiebers 2 der seitliche Endbereich (in x-Richtung) auf einem seitlichen Endbereich (in x-Richtung) des Zugangselements 1 aufliegt, so dass der Verschlussschieber 2 nicht durch eine Bewegung nach unten von dem Entriegelungselement 3 abgenommen werden kann. Auf diese Weise wird gewährleistet, dass der Verschlussschieber 2 stets ein Teil der Verschlusseinrichtung 10 bleibt und dass folglich zur Abnahme des Entriegelungselements 3 der Verschlussschieber 2 zwingender Weise in die Verschlussstellung versetzt werden muss.

Das Zugangselement 1, der Verschlussschieber 2 und/oder das Entriegelungselement 3 sind zweckmäßigerweise jeweils einstückige, insbesondere in Urform einstückig hergestellte, Teile. Beispielsweise handelt es sich bei dem Zugangselement 1, dem Verschlussschieber 2 und/oder dem Entriegelungselement 3 jeweils um Spritzgussteile.

Nachstehend soll unter Bezugnahme auf die Figuren 5, 6 und 7 eine Verschlusseinrichtung 20 gemäß einer zweiten Ausführungsform erläutert werden. Die Verschlusseinrichtung 20 entspricht im Wesentlichen der Verschlusseinrichtung 10. Gegenüber der Verschlusseinrichtung 10 ist die Verschlusseinrichtung 20 mit weiteren exemplarischen Details, insbesondere einer konkreten Ausgestaltung einer Führungseinrichtung 17, einem Sperrmechanismus 18 und einer Dichtung 24 gezeigt. Ferner ist bei der Verschlusseinrichtung 20 rein exemplarisch eine bestimmte Anzahl und Anordnung von Durchgangslöchern 7, Rastelementen 8 und Formelementen, insbesondere Zapfen 9, gezeigt. Es sei darauf hingewiesen, dass jeder dieser Aspekte auch bei der Verschlusseinrichtung 10 implementiert sein kann.

Die Verschlusseinrichtung 20 umfasst ein Zugangselement 11, einen Verschlussschieber 12 und ein Entriegelungselement 13, die, abgesehen von den nachstehend erläuterten, weiteren Merkmalen, jeweils in Entsprechung zu dem vorstehend diskutierten Zugangselement 1, Verschlussschieber 2 und Entriegelungselement 3 ausgebildet sein können und wie diese zusammengesetzt werden können, um die Verschlusseinrichtung 20 zu bilden.

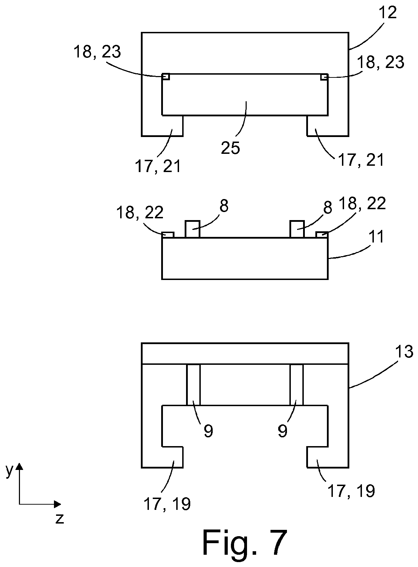

Die Figur 5 zeigt eine Draufsicht auf das Zugangselement 11, den Verschlussschieber 12 und das Entriegelungselement 13. Die Figur 6 zeigt eine Schnittansicht entlang der mit "VI" versehenen gestrichelten Linie in der Figur 5. Die Figur 7 zeigt eine Ansicht von vorne, wobei das Zugangselement 11, der Verschlussschieber 12 und das Entriegelungselement 13 anders angeordnet sind als in den Figuren 5 und 6.

Die Führungseinrichtung 17 der Verschlusseinrichtung 20 ist in den Figuren 6 und 7 zu sehen. Die Führungseinrichtung 17 ist eine konkrete Ausgestaltung der bereits vorstehend erläuterten Führungseinrichtung. Die Führungseinrichtung 17 ist ausgebildet, den Verschlussschieber 12 und/oder das Entriegelungselement 13 in einem an dem Verschlussschieber 12 angebrachten Zustand relativ zum Zugangselement 11 zu führen. Zweckmäßigerweise ist die Führungseinrichtung 17 ferner ausgebildet, eine Abnahme des Entriegelungselements 13 von dem Verschlussschieber 2 nur in der Verschlussstellung zu ermöglichen.

Die Führungseinrichtung 17 verfügt über einen am Verschlussschieber 2 angeordneten Führungsabschnitt 21 und einen am Entriegelungselement 3 angeordneten Führungsabschnitt 19. Die Führungsabschnitte 21 und 19 sind in Entsprechung zueinander ausgebildet und dienen jeweils dazu, das Zugangselement 11 aufzunehmen und linear beweglich zu führen. Exemplarisch umfassen die Führungsabschnitte 21 und 19 jeweils über L-förmige Schienen, wie dies z.B. in der Figur 7 gezeigt ist. Die L-förmigen Schienen sind jeweils an der Unterseite des Verschlussschiebers 12 und/oder des Entriegelungselements 13 vorgesehen. Das Zugangselement 1 kann zwischen den L-förmigen Schienen und der Unterseite des Verschlussschiebers 12 und/oder des Entriegelungselements 13 eingesetzt und linear geführt werden. Die Führungseinrichtung 17 gibt insbesondere eine Bewegung in x-Richtung frei und sperrt zweckmäßigerweise eine Bewegung in y-Richtung.

Vorzugsweise ist der Führungsabschnitt 19 derart ausgebildet, dass in einem Zustand, in dem sich der Verschlussschieber 12 in der Verschlussstellung befindet, noch keine Sperrung einer Bewegung des (an dem Verschlussschieber 12 angebrachten) Entriegelungselements 13 in y-Richtung gegeben ist, so dass das Entriegelungselement 13 in diesem Zustand von dem Verschlussschieber 12 abgenommen werden kann. Wie in der Figur 6 zu sehen, ist der Führungsabschnitt 19 entsprechend dimensioniert und erstreckt sich nicht über die gesamte x-Ausdehnung des Entriegelungselements 3.

Die Verschlusseinrichtung 20 umfasst ferner den Sperrmechanismus 18, der in der Freigabestellung des Verschlussschiebers 12 ein Verschieben des Verschlussschiebers 12 relativ zum Zugangselement 11 in Richtung weg von der Verschlussstellung verhindert. Dadurch wird gewährleistet, dass der Verschlussschieber 12 ständig an dem Zugangselement 11 verbleibt.

Wie in den Figuren 5 und 6 gezeigt, kann ein solcher Sperrmechanismus 18 beispielsweise durch einen Verschlussschieber-Vorsprung 22 und einen Zugangselement-Vorsprung 23 realisiert werden, die derart am Verschlussschieber 12 bzw. am Zugangselement 11 angeordnet sind, dass sie gegenseitig als Anschlag dienen und in der Freigabestellung eine weitere Bewegung des Verschlussschiebers 12 in Richtung weg von der Verschlussstellung verhindern.

Exemplarisch sind jeweils zwei Verschlussschieber-Vorsprünge 22 und zwei Zugangselement-Vorsprünge 23 vorgesehen, die zweckmäßigerweise an den seitlichen Endbereichen in x-Richtung des Zugangselements 11 und des Verschlussschiebers 12 angeordnet sind. Es können auch jeweils mehr oder weniger als zwei Vorsprünge vorgesehen sein. Zweckmäßigerweise sind die Verschlussschieber-Vorsprünge 22 und/oder die Zugangselement-Vorsprünge 23 derart ausgebildet, dass sie in einer Bewegungsrichtung des Verschlussschiebers 2 hin zu der Verschlussstellung aneinander vorbeigeführt werden können; z.B., wenn der Verschlussschieber 2 beim Zusammensetzen der Verschlusseinrichtung 20 auf das Zugangselement 11 geschoben wird. Dies kann z.B. durch eine entsprechende elastische Ausbildung und/oder eine abgeschrägte Form der Vorsprünge erzielt werden.

Exemplarisch verfügt das Entriegelungselement 13 an zwei entgegengesetzten Seiten jeweils über wenigstens ein Formelement, insbesondere einen Zapfen 9, so dass es gleichzeitig an zwei Verschlussschiebern anbringbar ist. Alternativ dazu kann das Entriegelungselement 13 auch nur an einer Seite über wenigstens ein Formelement, insbesondere einen Zapfen 9, verfügen.

Ferner verfügt das Entriegelungselement 13 exemplarisch an jeder Seite über jeweils zwei Formelemente, insbesondere Zapfen 9. Die Formelemente, insbesondere Zapfen 9, einer Seite sind zweckmäßigerweise in z-Richtung verteilt angeordnet. Das Entriegelungselement kann alternativ auch über mehr oder weniger Formelemente, insbesondere Zapfen 9, an einer oder jeder Seite verfügen.

Zweckmäßigerweise sind an dem Verschlussschieber 12 und dem Zugangselement 11 die Durchgangslöcher 7 bzw. die Rastelement 8 in Entsprechung zu den Formelemente, insbesondere Zapfen 9, vorgesehen.

Exemplarisch verfügt das Zugangselement 11 ferner über eine Dichtung 25, die an der Oberseite um die Zugangselement-Öffnung 5 herum angeordnet ist.

Die Figuren 8 und 9 zeigen eine exemplarische Ausführungsform eines Systems 30. Das System 30 umfasst eine vorstehend beschriebene Verschlusseinrichtung, beispielsweise die Verschlusseinrichtung 10 oder die Verschlusseinrichtung 20, als eine erste Verschlusseinrichtung.

Die erste Verschlusseinrichtung umfasst ein erstes Zugangselement 1a mit einer ersten Zugangselement-Öffnung 5a, einen ersten Verschlussschieber 2a, ein erstes Partikelauffangvolumen 4a und ein Entriegelungselement 3. Die Komponenten der ersten Verschlusseinrichtung sind zweckmäßigerweise wie die Komponenten der vorstehend erläuterten Verschlusseinrichtung 10 oder der Verschlusseinrichtung 20 ausgebildet. Das Entriegelungselement 3 ist an dem ersten Verschlussschieber 2a angebracht.

Das System 30 verfügt ferner über eine zweite Verschlusseinrichtung mit einem zweiten Zugangselement 1b, das eine zweite Zugangselement-Öffnung 5a aufweist. Die zweite Zugangselement-Öffnung 5b stellt einen Zugang zu einem zweiten Partikelauffangvolumen 4b bereit. Das System 30 verfügt ferner über einen zweiten Verschlussschieber 2b, der an dem Entriegelungselement 3 angebracht ist und mit dem sich die zweite Zugangselement-Öffnung 5b verschließen lässt. Die Komponenten der zweiten Verschlusseinrichtung sind zweckmäßigerweise in Entsprechung zu den Komponenten der vorstehend erläuterten Verschlusseinrichtung 10 oder der Verschlusseinrichtung 20 ausgebildet.

Zweckmäßigerweise ist das Entriegelungselement 3 relativ zu einer das Entriegelungselement 3 schneidenden y-z-Ebene spiegelsymmetrisch ausgestaltet. Vorzugsweise ist die erste Verschlusseinrichtung (ohne das Entriegelungselement 3) identisch und/oder spiegelsymmetrisch zu der zweiten Verschlusseinrichtung ausgebildet.

Vorzugsweise sind die Verschlussschieber 2a, 2b und das Entriegelungselement 3 mechanisch miteinander verbunden, so dass sie zusammen eine erste Baugruppe bilden und miteinander bewegungsgekoppelt sind. Die Verbindung der Verschlussschieber 2a, 2b mit dem Entriegelungselement 3 ist insbesondere dadurch bereitgestellt, dass die Formelemente, insbesondere Zapfen 9, des Entriegelungselements 3 in die Durchgangslöcher 7 der Verschlussschieber 2a, 2b eingesetzt sind. Die Verschlussschieber 2a, 2b und das Entriegelungselement 3 sind in x-Richtung aneinandergesetzt, wobei in x-Richtung auf jeder Seite des Entriegelungselements einer der Verschlussschieber 2a, 2b angeordnet ist. Das erste Zugangselement 1a und das zweite Zugangselement 1b sind zweckmäßigerweise ebenfalls miteinander verbunden und bilden eine zweite Baugruppe.

Die erste Baugruppe kann relativ zu der zweiten Baugruppe in x-Richtung linear verschoben werden. Das System 30 kann so wahlweise in einen der in den Figuren 8 und 9 gezeigten Zustände versetzt werden. Diese Zustände werden nachstehend als "erster Zustand" und "zweiter Zustand" bezeichnet.

Die Figur 8 zeigt das System 30 in dem ersten Zustand. In dem ersten Zustand befindet sich der erste Verschlussschieber 2a in einer Verschlussstellung und der zweite Verschlussschieber 2b in einer Freigabestellung. Die erste Zugangselement-Öffnung 5a wird von dem ersten Verschlussschieber 2a verschlossen. Die Entriegelungselement-Öffnung 14 befindet sich über der zweiten Zugangselement-Öffnung 5b und stellt mit dieser zusammen einen Zugang zu dem zweiten Partikelauffangvolumen 4b bereit.

Die Figur 9 zeigt das System 30 in dem zweiten Zustand. In dem zweiten Zustand befindet sich der erste Verschlussschieber 2a in einer Freigabestellung und der zweite Verschlussschieber 2b in einer Verschlussstellung. Die Entriegelungselement-Öffnung 14 befindet sich über der ersten Zugangselement-Öffnung 5a und stellt mit dieser zusammen einen Zugang zu dem ersten Partikelauffangvolumen 4a bereit. Die zweite Zugangselement-Öffnung 5b wird von dem zweiten Verschlussschieber 2b verschlossen.

Das System 30 ist insbesondere derart ausgebildet, dass sich das System 30 in jeder möglichen Verschiebestellung der Verschlussschieber 2a, 2b in einem Zustand befindet, in dem jede der Zugangselement-Öffnungen 5a, 5b jeweils entweder verschlossen ist oder zusammen mit der Entriegelungselement-Öffnung 14 den Zugang zu dem jeweiligen Partikelauffangvolumen 4a, 4b bereitstellt. Dies gilt insbesondere für die Verschiebestellung der Verschlussschieber 2a, 2b im ersten Zustand, im zweiten Zustand und in jeder möglichen Verschiebestellung dazwischen. Zu einem Kontakt einer der Zugangselement-Öffnungen 5a, 5b mit der Umgebung des Systems 30 kann es folglich nicht kommen, so dass auf diese Weise das Risiko einer Kontamination weiter verringert werden kann.

Exemplarisch verfügt das System 30 über eine Partikelquelle 15, beispielsweise einen Saugkopf und/oder eine Zykloneinrichtung, sowie eine Partikelleitung 16, beispielsweise einen Schlauch, die die Partikelquelle 15 mit der Entriegelungselement-Öffnung 14 verbindet. Ferner verfügt das System 30 exemplarisch über zwei Partikelauffangvolumina 4a und 4b, die beispielsweise die Innenvolumina von zwei Beuteln, insbesondere Entsorgungssäcken oder Filtersäcken, und/oder Behältern, insbesondere Entsorgungsbehältern, darstellen.

Die Zykloneinrichtung wird beispielsweise als Abscheide-Vorstufe betrieben und ist zweckmäßigerweise vor eine weitere Abscheidervorrichtung geschaltet, beispielsweise vor eine Saugvorrichtung, insbesondere einen Staubsauger.

Im Betrieb ist es so insbesondere möglich, von einem Partikelauffangvolumen 4a, 4b zu dem anderen Partikelauffangvolumen 4a, 4b zu wechseln, ohne dass dabei ein mit Partikeln kontaminierter Bereich - also insbesondere die beiden Partikelauffangvolumina 4a, 4b, die Zugangselement-Öffnungen 5a, 5b, die Entriegelungselement-Öffnung 14 und/oder das Innenvolumen der Partikelleitung 16 - der Umgebung des Systems 30 gegenüber geöffnet wird. Beispielsweise kann zunächst mit der in der Figur 8 gezeigten Stellung begonnen werden und über die Partikelleitung 16 zugeführte Partikel in dem zweiten Partikelauffangvolumen 4b gesammelt werden.

Wenn beispielsweise das zweite Partikelauffangvolumen 4b voll ist, kann dann die Baugruppe aus erstem Verschlussschieber 2a, Entriegelungselement 3 und zweitem Verschlussschieber 2b verschoben werden, so dass das System 30 in die in der Figur 9 gezeigte Stellung versetzt wird. In dieser Stellung werden die von der Partikelleitung 16 zugeführten Partikel dann in das erste Partikelauffangvolumen 4a befördert.

Gemäß einer weiteren nicht gezeigten Ausführungsform wird eine Saugvorrichtung bereitgestellt, die das System 30, die Verschlussvorrichtung 10 und/oder die Verschlussvorrichtung 20 umfasst. Die Saugvorrichtung ist vorzugsweise eine Sauganlage, beispielsweise eine stationäre Sauganlage, oder ein Mobilsauger. Die Saugvorrichtung dient dem Aufsaugen von Partikeln, beispielsweise von Staub und/oder Bauschutt.

## Patentansprüche

1. Verschlusseinrichtung (10, 20) zum Verschließen eines Partikelauffangvolumens (4), insbesondere eines Beutels oder eines Behälters, umfassend:
ein Zugangselement (1, 11) mit einer Zugangselement-Öffnung (5) zur Bereitstellung eines Zugangs zu dem Partikelauffangvolumen (4),
einen Verschlussschieber (2, 12), der relativ zum Zugangselement (1, 11) wahlweise in eine Freigabestellung oder eine Verschlussstellung versetzt werden kann, wobei der Verschlussschieber (2, 12) in der Freigabestellung die Zugangselement-Öffnung (5) freigibt und in der Verschlussstellung die Zugangselement-Öffnung (5) verschließt,
einen Verriegelungsmechanismus (6) zur Verriegelung des Verschlussschiebers (2, 12) in der Verschlussstellung gegenüber dem Zugangselement (1), **dadurch gekennzeichnet, dass** der Verriegelungsmechanismus (6) zur Entriegelung ein von dem Verriegelungsmechanismus (6) separates Entriegelungselement (3, 13) erfordert.

2. Verschlusseinrichtung (10, 20) nach Anspruch 1, ferner umfassend das Entriegelungselement (3, 13), wobei das Entriegelungselement (3, 13) vorzugsweise ein von dem Verschlussschieber (2, 12) und/oder dem Zugangselement (1, 11) separat vorgesehenes Teil ist.

3. Verschlusseinrichtung (10, 20) nach Anspruch 2, **dadurch gekennzeichnet, dass** das Entriegelungselement (3, 13) an dem Verschlussschieber (2, 12) anbringbar ist und im angebrachten Zustand zusammen mit dem Verschlussschieber (2, 12) relativ zum Zugangselement (1, 12) bewegbar ist.

4. Verschlusseinrichtung (10, 20) nach Anspruch 2 oder 3, **dadurch gekennzeichnet, dass** das Entriegelungselement (3, 13) über eine Entriegelungselement-Öffnung (14) verfügt, die in einem Zustand, in dem das Entriegelungselement (3, 13) an dem Verschlussschieber (2, 12) angebracht ist und sich der Verschlussschieber (2, 12) in der Freigabestellung befindet, über der Zugangselement-Öffnung (5) befindet, so dass die Zugangselement-Öffnung (5) und die Entriegelungselement-Öffnung (14) zusammen den Zugang zu dem Partikelauffangvolumen (4) bereitstellen.

5. Verschlusseinrichtung (10, 20) nach Anspruch 4, **dadurch gekennzeichnet, dass** in einem Zustand, in dem das Entriegelungselement (3, 13) an dem Verschlussschieber (2, 12) angebracht ist, der Verschlussschieber ausschließlich zwischen der Freigabestellung und der Verschlussstellung verschiebbar ist, wobei sich die Verschlusseinrichtung (10, 20) in jeder möglichen Verschiebestellung des Verschlussschiebers in einem Zustand befindet, in dem die Zugangselement-Öffnung (5) entweder verschlossen ist oder zusammen mit der Entriegelungselement-Öffnung (14) den Zugang zu dem Partikelauffangvolumen (4) bereitstellt.

6. Verschlusseinrichtung (10, 20) nach einem der Ansprüche 2 bis 5, **dadurch gekennzeichnet, dass** der Verriegelungsmechanismus (6) ein im Verschlussschieber (2, 12) angeordnetes Durchgangsloch (7) und ein an dem Zugangselement (1, 11) angeordnetes Rastelement (8) umfasst, das in der Verschlussstellung in das Durchgangsloch (7) greift und den Verschlussschieber (2, 12) so in der Verschlussstellung verriegelt.

7. Verschlusseinrichtung (10, 20) nach Anspruch 6, **dadurch gekennzeichnet, dass** das Durchgangsloch (7) und/oder das Rastelement (8) derart ausgebildet ist, dass in der Verschlussstellung das in das Durchgangsloch (7) greifende Rastelement (8) rein händisch nicht betätigbar ist, so dass zur Entriegelung des Verriegelungsmechanismus (7) ein Entriegelungselement (3, 13) mit einem in das Durchgangsloch (7) einführbaren Formelement, insbesondere einem Zapfen (9), erforderlich ist.

8. Verschlusseinrichtung (20) nach einem der Ansprüche 2 bis 7, **gekennzeichnet durch** eine Führungseinrichtung (17), die ausgebildet ist, das Entriegelungselement (13) in einem an dem Verschlussschieber (12) angebrachten Zustand relativ zum Zugangselement (11) zu führen und eine Abnahme des Entriegelungselements nur in der Verschlussstellung zu ermöglichen.

9. Verschlusseinrichtung (10, 20) nach einem der Ansprüche 2 bis 8, **dadurch gekennzeichnet, dass** der Verschlussschieber (2, 12) in einem Zustand, in dem das Entriegelungselement (3, 13) an dem Verschlussschieber (2, 12) angebracht ist und sich der Verschlussschieber (2, 12) in der Freigabestellung befindet, mit einem seitlichen Endbereich auf dem Zugangselement (1, 11) aufliegt, so dass der Verschlussschieber (2, 12) in diesem Zustand nicht von dem Entriegelungselement (3, 13) abgenommen werden kann.

10. Verschlusseinrichtung (20) nach einem der Ansprüche 2 bis 9, **gekennzeichnet durch** einen Sperrmechanismus (18), der in der Freigabestellung des Verschlussschiebers (12) ein Verschieben des Verschlussschiebers (2, 12) relativ zum Zugangselement (11) in Richtung weg von der Verschlussstellung verhindert.

11. Verschlusseinrichtung (10, 20) nach einem der Ansprüche 2 bis 10, **dadurch gekennzeichnet, dass** das Entriegelungselement (3, 13) an zwei entgegengesetzten Seiten jeweils ein Formelement, insbesondere einen Zapfen (9), aufweist, so dass es gleichzeitig an zwei Verschlussschiebern (2a, 2b) anbringbar ist.

12. System (30), umfassend eine Verschlusseinrichtung nach einem der Ansprüche 2 bis 11 als erste Verschlusseinrichtung, wobei das Zugangselement ein erstes Zugangselement (1a), der Verschlussschieber ein erster Verschlussschieber (2a), das Partikelauffangvolumen ein erstes Partikelauffangvolumen (4a) und die Zugangselement-Öffnung eine erste Zugangselement-Öffnung (5a) ist, wobei das Entriegelungselement (3) an dem ersten Verschlussschieber (2a) angebracht ist, **gekennzeichnet durch** eine zweite Verschlusseinrichtung mit einem zweiten Zugangselement (1b), das eine zweite Zugangselement-Öffnung (5a) aufweist, das einen Zugang zu einem zweiten Partikelauffangvolumen (4b) bereitstellt, und einem zweiten Verschlussschieber (2a), der an dem Entriegelungselement (3) angebracht ist und mit dem sich die zweite Zugangselement-Öffnung (5a) verschließen lässt.

13. System (30) nach Anspruch 12, **dadurch gekennzeichnet, dass** die Verschlussschieber (2a, 2b) über das Entriegelungselement (3) miteinander bewegungsgekoppelt sind, wobei sich das System (30) in jeder Verschiebestellung der Verschlussschieber (2a, 2b) in einem Zustand befindet, in dem jede der Zugangselement-Öffnungen (5a, 5b) jeweils entweder verschlossen ist oder zusammen mit der Entriegelungselement-Öffnung (14) den Zugang zu dem jeweiligen Partikelauffangvolumen (4a, 4b) bereitstellt.

14. Partikelauffanganordnung umfassend eine Verschlusseinrichtung (10, 20) nach einem der Ansprüche 2 bis 11 sowie einen Beutel, insbesondere einen Entsorgungssack oder einen Filtersack, oder einen Behälter, insbesondere einen Entsorgungsbehälter, wobei die Verschlusseinrichtung (10, 20) an dem Beutel oder dem Behälter angebracht ist.

15. Saugvorrichtung zum Aufsaugen von Partikeln, insbesondere Staub, in ein Partikelauffangvolumen, umfassend ein System (30) nach Anspruch 12 oder 13 und/oder eine Verschlusseinrichtung (10, 20) nach einem der Ansprüche 1 bis 11.

## Claims

1. Closure device (10, 20) for closing a particle capture volume (4), in particular of a bag or a container, comprising
an access element (1, 11) with an access element opening (5) for providing an access to the particle capture volume (4),
a closure slide (2, 12) which is selectively displaceable relative to the access element (1, 11) into a release position or into a closure position, wherein in the release position the closure slide (2, 12) releases the access element opening (5) and in the closure position closes the access element opening (5),
a locking mechanism (6) for locking the closure slide (2, 12) in the closure position with respect to the access element (1), **characterized in that**, for unlocking, the locking mechanism (6) requires an unlocking element (3, 13) separate from the locking mechanism (6).

2. Closure device (10, 20) according to claim 1, further comprising the unlocking element (3, 13), wherein the unlocking element (3, 13) is preferably a part which is provided separately from the closure slide (2, 12) and/or from the access element (1, 11).

3. Closure device (10, 20) according to claim 2, **characterised in that** the unlocking element (3, 13) is attachable to the closure slide (2, 12) and in the attached state is movable together with the closure slide (2, 12) relative to the access element (1, 12).

4. Closure device (10, 20) according to claim 2 or 3, **characterised in that** the unlocking element (3, 13) comprises an unlocking element opening (14) which, in a state in which the unlocking element (3, 13) is attached to the closure slide (2, 12) and the closure slide (2, 12) is situated in the release position, is located over the access element opening (5), so that the access element opening (5) and the unlocking element opening (14) together provide the access to the particle capture volume (4).

5. Closure device (10, 20) according to claim 4, **characterised in that** in a state in which the unlocking element (3, 13) is attached to the closure slide (2, 12), the closure slide is exclusively displaceable between the release position and the closure position, wherein the closure device (10, 20) in every possible displacement position of the closure slide is situated in a state in which the access element opening (5) is either closed or together with the unlocking element opening (14) provides the access to the particle capture volume (4).

6. Closure device (10, 20) according to one of the claims 2 to 5, **characterised in that** the locking mechanism (6) comprises a through-hole (7) which is arranged in the closure slide (2, 12) and a latching element (8) which is arranged on the access element (1, 11) and which in the closure position engages into the through-hole (7) and hence locks the closure slide (2, 12) in the closure position.

7. Closure device (10, 20) according to claim 6, **characterised in that** the through-hole (7) and/or the latching element (8) is designed in a manner such that in the closure position the latching element (8) which engages into the through hole (7) cannot be actuated merely by hand, so that, for unlocking the locking mechanism (7), an unlocking element (3, 13) with a shape element, in particular a pin (9), which can be inserted into the through-hole (7), is necessary.

8. Closure device (20) according one of the claims 2 to 7, **characterised by** a guide device (17) which is designed to guide the unlocking element (13) in a state attached to the closure slide (12), relative to the access element (11) and to permit a removal of the unlocking element only in the closure position.

9. Closure device (10, 20) according to one of the claims 2 to 8, **characterised in that** in a state in which the unlocking element (3, 13) is attached to the closure slide (2, 12) and the closure slide (2, 12) is situated in the release position, the closure slide (2, 12) lies with a lateral end region on the access element (1, 11), so that the closure slide (2, 12) cannot be removed from the unlocking element (3, 13) in this state.

10. Closure device (20) according to one of the claims 2 to 9, **characterised by** a blocking mechanism (18) which in the release position of the closure slide (12) prevents a displacing of the closure slide (2, 12) relative to the access element (11) in the direction away from the closure position.

11. Closure device (10, 20) according to one of the claims 2 to 10, **characterised in that** the unlocking element (3, 13) comprises on two opposite sides a respective shape element, in particular a pin (9), so that it is simultaneously attachable to two closure slides (2a, 2b).

12. System (30), comprising a closure device according to one of the claims 2 to 11 as a first closure device, wherein the access element is a first access element (1a), the closure slide a first closure slide (2a), the particle capture volume a first particle capture volume (4a) and the access element opening a first access element opening (5a), wherein the unlocking element (3) is attached to the first closure slide (2a), **characterised by** a second closure device with a second access element (1b) which comprises a second access element opening (5a) which provides an access to a second particle capture volume (4b), and with a second closure slide (2a) which is attached to the unlocking element (3) and with which the second access element opening (5a) can be closed.

13. System (30) according to claim 12, **characterised in that** the closure slides (2a, 2b) are coupled in movement to one another via the unlocking element (3), wherein the system (30) in each displacement position of the closure slides (2a, 2b) is situated in a state in which each of the access element openings (5a, 5b) is either closed or together with the unlocking element opening (14) provides the access to the respective particle capture volume (4a, 4b).

14. Particle capture arrangement comprising a closure device (10, 20) according to one of the claims 2 to 11, as well as a bag, in particular a disposal sack or a filter sack, or a container, in particular a disposal container, wherein the closure device (10, 20) is attached to the bag or to the container.

15. Suction apparatus for sucking particles, in particular dust, into a particle capture volume, comprising a system (30) according to claim 12 or 13 and/or a closure device (10, 20) according to one of the claims 1 to 11.

## Revendications

1. Appareil de fermeture (10, 20) pour fermer un volume de collecte de particules (4), en particulier d'un sachet ou d'un récipient, comprenant :
un élément d'accès (1, 11) avec une ouverture d'élément d'accès (5) pour la fourniture d'un accès au volume de collecte de particules (4),
un coulisseau de fermeture (2, 12), qui peut être amené par rapport à l'élément d'accès (1, 11) sélectivement dans une position de libération ou une position de fermeture, dans lequel le coulisseau de fermeture (2, 12) dans la position de libération libère l'ouverture d'élément d'accès (5) et dans la position de fermeture ferme l'ouverture d'élément d'accès (5),
un mécanisme de verrouillage (6) pour le verrouillage du coulisseau de fermeture (2, 12) dans la position de fermeture vis-à-vis de l'élément d'accès (1), **caractérisé en ce que** le mécanisme de verrouillage (6) pour le déverrouillage nécessite un élément de déverrouillage (3, 13) séparé du mécanisme de verrouillage (6).

2. Appareil de fermeture (10, 20) selon la revendication 1, comprenant en outre l'élément de déverrouillage (3, 13), dans lequel l'élément de déverrouillage (3, 13) est de préférence une pièce prévue séparément du coulisseau de fermeture (2, 12) et/ou de l'élément d'accès (1, 11).

3. Appareil de fermeture (10, 20) selon la revendication 2, **caractérisé en ce que** l'élément de déverrouillage (3, 13) peut être monté sur le coulisseau de fermeture (2, 12) et dans l'état monté est mobile conjointement avec le coulisseau de fermeture (2, 12) par rapport à l'élément d'accès (1, 12).

4. Appareil de fermeture (10, 20) selon la revendication 2 ou 3, **caractérisé en ce que** l'élément de déverrouillage (3, 13) dispose d'une ouverture d'élément de déverrouillage (14), qui dans un état dans lequel l'élément de déverrouillage (3, 13) est monté sur le coulisseau de fermeture (2, 12) et le coulisseau de fermeture (2, 12) se trouve dans la position de libération, se trouve au-dessus de l'ouverture d'élément d'accès (5), de sorte que l'ouverture d'élément d'accès (5) et l'ouverture d'élément de déverrouillage (14) fournissent conjointement l'accès au volume de collecte de particules (4).

5. Appareil de fermeture (10, 20) selon la revendication 4, **caractérisé en ce que** dans un état dans lequel l'élément de déverrouillage (3, 13) est monté sur le coulisseau de fermeture (2, 12), le coulisseau de fermeture peut se déplacer exclusivement entre la position de libération et la position de fermeture, dans lequel l'appareil de fermeture (10, 20) dans chaque position de déplacement possible du coulisseau de fermeture se trouve dans un état dans lequel l'ouverture d'élément d'accès (5) soit est fermée soit fournit conjointement avec l'ouverture d'élément de déverrouillage (14) l'accès au volume de collecte de particules (4).

6. Appareil de fermeture (10, 20) selon l'une quelconque des revendications 2 à 5, **caractérisé en ce que** le mécanisme de verrouillage (6) comprend un trou débouchant (7) disposé dans le coulisseau de fermeture (2, 12) et un élément d'encliquetage (8) disposé sur l'élément d'accès (1, 11), qui dans la position de fermeture passe dans le trou débouchant (7) et verrouille ainsi le coulisseau de fermeture (2, 12) dans la position de fermeture.

7. Appareil de fermeture (10, 20) selon la revendication 6, **caractérisé en ce que** le trou débouchant (7) et/ou l'élément d'encliquetage (8) est réalisé de telle sorte que dans la position de fermeture l'élément d'encliquetage (8) passant dans le trou débouchant (7) ne peut pas être actionné simplement à la main, de sorte que pour le déverrouillage du mécanisme de verrouillage (7) un élément de déverrouillage (3, 13) avec un élément façonné pouvant être introduit dans le trou débouchant (7), en particulier un tourillon (9), est nécessaire.

8. Appareil de fermeture (20) selon l'une quelconque des revendications 2 à 7, **caractérisé par** un dispositif de guidage (17), qui est réalisé pour guider l'élément de déverrouillage (13) dans un état monté sur le coulisseau de fermeture (12) par rapport à l'élément d'accès (11) et pour permettre un enlèvement de l'élément de déverrouillage uniquement dans la position de fermeture.

9. Appareil de fermeture (10, 20) selon l'une quelconque des revendications 2 à 8, **caractérisé en ce que** le coulisseau de fermeture (2, 12), dans un état dans lequel l'élément de déverrouillage (3, 13) est monté sur le coulisseau de fermeture (2, 12) et le coulisseau de fermeture (2, 12) se trouve dans la position de libération, repose avec une zone d'extrémité latérale sur l'élément d'accès (1, 11), de sorte que le coulisseau de fermeture (2, 12) dans cet état ne peut pas être enlevé de l'élément de déverrouillage (3, 13).

10. Appareil de fermeture (20) selon l'une quelconque des revendications 2 à 9, **caractérisé par** un mécanisme de verrouillage (18), qui dans la position de libération du coulisseau de fermeture (12) empêche un déplacement du coulisseau de fermeture (2, 12) par rapport à l'élément d'accès (11) dans une direction s'éloignant de la position de fermeture.

11. Appareil de fermeture (10, 20) selon l'une quelconque des revendications 2 à 10, **caractérisé en ce que** l'élément de déverrouillage (3, 13) présente sur deux faces opposées respectivement un élément façonné, en particulier un tourillon (9), de sorte qu'il peut être monté simultanément sur deux coulisseaux de fermeture (2a, 2b).

12. Système (30), comprenant un appareil de fermeture selon l'une quelconque des revendications 2 à 11 en tant que premier appareil de fermeture, dans lequel l'élément d'accès est un premier élément d'accès (1a), le coulisseau de fermeture un premier coulisseau de fermeture (2a), le volume de collecte de particules un premier volume de collecte de particules (4a) et l'ouverture d'élément d'accès une première ouverture d'élément d'accès (5a), dans lequel l'élément de déverrouillage (3) est monté sur le premier coulisseau de fermeture (2a), **caractérisé par** un deuxième appareil de fermeture avec un deuxième élément d'accès (1b), qui présente une deuxième ouverture d'élément d'accès (5a), qui fournit un accès à un deuxième volume de collecte de particules (4b), et un deuxième coulisseau de fermeture (2a), qui est monté sur l'élément de déverrouillage (3) et peut être fermé avec la deuxième ouverture d'élément d'accès (5a).

13. Système (30) selon la revendication 12, **caractérisé en ce que** les coulisseaux de fermeture (2a, 2b) sont accouplés en mouvement l'un à l'autre par l'intermédiaire de l'élément de déverrouillage (3), dans lequel le système (30) dans chaque position de déplacement du coulisseau de fermeture (2a, 2b) se trouve dans un état dans lequel chacune des ouvertures d'élément d'accès (5a, 5b) respectivement soit est fermée soit fournit conjointement avec l'ouverture d'élément de déverrouillage (14) l'accès au volume de collecte de particules (4a, 4b) respectif.

14. Ensemble de collecte de particules comprenant un appareil de fermeture (10, 20) selon l'une quelconque des revendications 2 à 11 ainsi qu'un sachet, en particulier un sac d'élimination ou un sac filtrant, ou un récipient, en particulier un récipient d'élimination, dans lequel l'appareil de fermeture (10, 20) est monté sur le sachet ou le récipient.

15. Dispositif d'aspiration pour aspirer des particules, en particulier de la poussière, dans un volume de collecte de particules, comprenant un système (30) selon la revendication 12 ou 13 et/ou un appareil de fermeture (10, 20) selon l'une quelconque des revendications 1 à 11.
